# EUROPEAN PATENT APPLICATION

(11) **EP 4 465 214 A1**
(43) Date of publication of application: **20.11.2024**
(21) Application number: 24176797.9
(22) Date of filing: 17.05.2024
(51) Int. Cl.: G06N 20/00, G06N 3/098, G06N 3/063, G06N 3/084

(54) **MODEL-AWARE METHOD AND SYSTEM FOR TRAINING AND/OR FINE-TUNING A MACHINE LEARNING MODEL**

(30) Priority: 18.05.2023 US 202318319636
(71) Applicant: Lemon Inc., Grand Cayman, KY1-1205 (KY)
(72) Inventor: LIU, Tongping, Los Angeles, 90066 (US); XU, Wei, Los Angeles, 90066 (US); CHEN, Jianjun, Los Angeles, 90066 (US)
(74) Representative: Dentons UK and Middle East LLP

(57) **Abstract**

System and method of training a machine learning model on a plurality of devices in parallel are provided. The method includes performing a model profiling execution before a model normal execution, allocating (360) tensors of the model into a plurality of chunks based on profiling results from the model profiling execution, and performing the model normal execution on the plurality of devices in parallel to train or fine-tune the model.

## Description

### FIELD

The embodiments described herein pertain generally to training and/or fine-tuning a machine learning model. More specifically, the embodiments described herein pertain to methods and systems for training and/or fine-tuning a machine learning model in a distributed training and/or fine-tuning system.

### BACKGROUND

Training and/or fine-tuning a machine learning model has been a continuous focus in the machine learning field. Various types of machine learning parallelisms may be utilized to support the training and/or fine-tuning of a machine learning model on multiple devices or graphics processing units concurrently and to improve the throughput of the training and/or fine-tuning. Machine learning parallelisms may include data parallelism, pipeline parallelism, tensor parallelism, etc., where data parallelism may be widely used due to its simplicity and scalability.

### SUMMARY

Features in the embodiments disclosed herein may support machine learning parallelism such as data parallelism without requiring modifications or changes to the machine learning model. Features in the embodiments disclosed herein may also account for the locality issues to improve efficiency, by. e.g., allocating tensors based on their execution sequence, etc. Features in the embodiments disclosed herein may further provide adaptive memory management to reduce or eliminate the need of manual configuration.

Features in the embodiments disclosed herein may solve issues of existing solutions of data parallelism which may require substantial memory or communication overhead due to locality issues, require modifications or changes to the machine learning model, and/or require significant manual configuration of memory offloading, etc.

In one example embodiment, a method for training a machine learning model on a plurality of devices in parallel is provided. The method includes performing a model profiling execution before a model normal execution, allocating or assigning tensors of the model into a plurality of chunks based on profiling results from the model profiling execution, and performing the model normal execution on the plurality of devices in parallel to train the model.

In another example embodiment, a machine learning model training system is provided. The system includes at least one processor and a memory to store a machine learning model. The at least one processor is to perform a model profiling execution before a model normal execution, allocate tensors of the model into chunks based on profiling results from the model profiling execution, and perform the model normal execution on a plurality of devices in parallel to train the model.

In yet another example embodiment, a non-transitory computer-readable medium having computer-executable instructions stored thereon is provided. The instructions, upon execution, cause one or more processors to perform operations including performing a model profiling execution before a model normal execution, allocating tensors of a machine learning model into chunks based on profiling results from the model profiling execution, and performing the model normal execution on a plurality of devices in parallel to train the model.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Non-limiting and non-exhaustive descriptions are described with reference to the following drawings. The components in the figures are not necessarily to scale, emphasis instead being placed upon illustrating principles. In the detailed description that follows, embodiments are described as illustrations only since various changes and modifications may become apparent to those skilled in the art from the following detailed description.
FIG. 1 is a schematic view of an example distributed training and/or fine-tuning system for sharded data parallelism, arranged in accordance with at least some embodiments described herein.
FIG. 2 is a schematic view of an example processing flow of a sharded data parallelism system for optimizing, training, and/or fine-tuning a machine learning model, arranged in accordance with at least some embodiments described herein.
FIG. 3 is a flow chart illustrating an example processing flow of performing operations of a profiling phase and operations of a sharding phase, in accordance with at least some embodiments described herein.
FIG. 4 is a schematic structural diagram of an example computer system applicable to implementing an electronic device, arranged in accordance with at least some embodiments described herein.

### DETAILED DESCRIPTION OF EMBODIMENTS

In the following detailed description, particular embodiments of the present disclosure are described herein with reference to the accompanying drawings, which form a part of the description. In this description, as well as in the drawings, like-referenced numbers represent elements that may perform the same, similar, or equivalent functions, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting. It will be readily understood that the aspects of the present disclosure, as generally described herein and illustrated in the drawings, may be arranged, substituted, combined, separated, and designed in a wide variety of different configurations, all of which are explicitly contemplated herein.

It is to be understood that the disclosed embodiments are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Additionally, the present disclosure may be described herein in terms of functional block components and various processing steps. It should be appreciated that such functional blocks may be realized by any number of hardware and/or software components configured to perform the specified functions.

The scope of the disclosure should be determined by the appended claims and their legal equivalents, rather than by the examples given herein. For example, the steps recited in any method claims may be executed in any order and are not limited to the order presented in the claims. Moreover, no element is essential to the practice of the disclosure unless specifically described herein as "critical" or "essential".

As referenced herein, "machine learning" is a term of art and may refer to a computer or processor-related technology by which decisions and/or actions are autonomously made, learned, and/or trained, in place of human intervention. Machine learning is a branch of artificial intelligence which focuses on the use of data and algorithms to imitate the way that humans learn, gradually improving its accuracy. Machine learning may include software, i.e., algorithms and/or programs, hardware or firmware, or any combination thereof that supports machine learning, natural language understanding, natural language processing, speech recognition, computer vision, etc. Also included among the range of machine learning functions and capabilities, and pertinent to the embodiments disclosed, recited, and suggested herein, training and/or fine-tuning of a machine learning model.

As referenced herein, a "model" or "machine learning model" is a term of art and may refer to software, such as algorithms and/or programs, hardware or firmware, or any combination thereof that supports machine learning, natural language understanding, natural language processing, speech recognition, computer vision, etc. In an example embodiment, the process of training a model involves providing a machine learning algorithm (e.g., a learning algorithm, etc.) with training data to learn from, and the machine learning model may refer to the model artifact that is created by the training process.

As referenced herein, a "parameter" of a model or a "model parameter" is a term of art and may refer to a configuration variable that is internal to the model and whose value may be estimated from the given data. Model parameters are required by the model when making predictions, and model parameters may determine how the input data is transformed into the desired output. In an example embodiment, "weight" is a model parameter that transforms input data within the (hidden) layers of the model, and/or that represents a strength of the connection between units or nodes of the model. In an example embodiment, "bias" is a model parameter that represents the amount that a model's prediction differs from the target value, compared to the training data.

As referenced herein, an "optimizer" is a term of art and may refer to a function or algorithm that modifies the attributes or parameters (e.g., weights, learning rates, etc.) of a machine learning process, method, or model. In an example embodiment, the optimizer may help in reducing the overall loss and improving accuracy, minimizing an error function (e.g., a loss function, etc.), and/or maximizing the efficiency of production. As referenced herein, "optimizer state" is a term of art and may refer to the optimizer's momentum vector or history-tracking properties. In an example embodiment, an optimizer's state may include parameters that are being optimized, any hyper-parameters in use, etc.

As referenced herein, a "gradient" is a term of art and may refer to a generalization of the derivative to multivariate functions. In an example embodiment, a gradient may capture the local slope of a function, allowing for predicting the effect of taking a step from a point in a direction. In machine learning, a gradient may refer to a vector which gives the direction of maximum rate of change of a function. By taking steps in that direction, an optimal solution of the function may be reached.

As referenced herein, "FP16" is a term of art and may refer to a half-precision binary floating-point format or data structure that occupies 16 bits in computer memory. "FP32" is a term of art and may refer to a single-precision binary floating-point format or data structure that occupies 32 bits in computer memory.

As referenced herein, a "tensor" is a term of art and may refer to model data of a machine learning model. In an example embodiment, tensors may refer to model data related to states of a model such as model parameters, gradients, and/or optimizer states, etc., that are related by the model structure definition. In an example embodiment, model parameters and gradients may be of an FP16 type data, and optimizer states may be of an FP32 type data. In an example embodiment, a tensor may have a size of e.g., a few kilobytes. In an example embodiment, a tensor may work as a finite state machine. It is to be understood that when a tensor is used during the execution of the model (using training data or non-training data), the tensor is "executed".

As referenced herein, a "chunk" is a term of art and may refer to a continuous memory space has a defined size. In an example embodiment, a chunk may have a size of e.g., a few hundred megabytes. In an example embodiment, tensors may be allocated, arranged, organized, or otherwise stored in multiple chunks having a same chunk size or different chunk sizes.

As referenced herein, a "forward" propagation, pass, or operation is a term of art and may refer to a function, operation, or algorithm to obtain or generate the actual output of the machine learning model. In an example embodiment, in a forward operation, input data may be fed to the model in a forward direction, e.g., by propagating the input data to an input layer, going through hidden layer(s) and successive layer(s), measuring the model's predictions from the output layer, and calculating the model error based on the predictions the model made. As referenced herein, a "backpropagation" or "backward" propagation, pass, or operation is a term of art and may refer to a function, operation, or algorithm to traverse the model in a reverse sequence, from the output layer (going through the hidden layer(s) and the successive layer(s)) to the input layer, and to calculate the gradient with respect to the model parameters. In an example embodiment, in a backward operation, the flow is reversed (from the forward operation) by e.g., propagating the error to the output layer until reaching the input layer passing through the hidden layer(s). It is to be understood that one "training step" or "fine-tuning step" is a term of art and may refer to a process that includes at least a forward operation and a backward operation based on a batch of input data.

As referenced herein, a "model profiling execution" may refer to one or a single training or fine-tuning step of executing the training of a machine learning model (using training data or non-training data), e.g., to gather or obtain the required or desired information or data regarding to the normal training execution of the model, such as e.g., status, execution sequence or timestamp, execution phase (e.g., in forward operation phase or backward operation phase, etc.), the hook-able attribute, or the like, of a tensor and/or its module, the relationship between a tensor and its module, memory usage of each execution phase, etc. It is to be understood that the model profiling execution is for gathering or obtaining the required or desired information or data regarding the execution of the model, instead of for optimizing, training, or fine-tuning the model. As referenced herein, a "model normal execution" may refer to one or multiple iterations of training and/or fine-tuning the machine learning model using training data. It is also to be understood that a model profiling execution may take e.g., one or a few minutes to run to a completion, while a model normal execution may take a day, a week, a month, or more time to run to a completion.

As referenced herein, a "hook" is a term of art and may refer to a function, operation, or algorithm that is executed or triggered when e.g., a condition is met. In an example embodiment, a hook may be registered, installed, arranged, or otherwise associated with or on a tensor or a module of the model that contains the tensor. In an example embodiment, the hook may include a pre-forward hook, a post-forward hook, a pre-backward hook, a post-backward hook, etc. The pre-forward hook may be executed or triggered e.g., immediately before (e.g., no other function or operation being performed or executed in between) the forward operation is executed, performed, invoked, or called. The post-forward hook may be executed or triggered e.g., immediately after (e.g., no other function or operation being performed or executed in between) the forward operation is executed, performed, invoked, or called. The pre-backward hook may be executed or triggered e.g., immediately before the backward operation is executed, performed, invoked, or called. The post-backward hook may be executed or triggered e.g., immediately after the backward operation is executed, performed, invoked, or called. It is to be understood that a hook may include a handler (a function, operation, or algorithm in the hook), which may be used to perform a desired or predetermined action, function, or operation (e.g., monitoring and/or recording the status, execution sequence/timestamp, execution phase, etc. of a tensor and/or its module, etc.).

As referenced herein, "parallelism" is a term of art and may refer to a process of processing several set of instructions simultaneously, to e.g., reduce the total computational time, etc. A machine learning parallelism may refer to a process of supporting the training of a machine learning model on multiple devices (e.g., graphics processing units (GPUs), etc.) concurrently and to improve the training throughput. Data parallelism is one of the machine learning parallelisms for distributing the training of machine learning models across multiple devices or nodes, where each device or node may process a different subset of the training data simultaneously. It is to be understood that data parallelism may be effective for large-scale machine learning tasks, where the amount of training data may be too large to fit in the memory of a single device. It is also to be understood that the model and the training datasets are getting larger and larger and the training time may become an issue if a single-GPU training is used. Data parallelism is commonly used due to its simplicity. In an example embodiment, in the model training with data parallelism, the training dataset is split into several portions, each portion is allocated to a device. After the backward operation, the gradients of the model may be all-reduced e.g., by performing reductions (e.g., aggregations such as sum, max, min, average, etc.) on the data across the devices and writing the result in the receive buffers of every device so that the model parameters on different devices can stay synchronized.

As referenced herein, "shard" or "sharding" or "distribute" or "distributing" may refer to an action, function, operation, or algorithm for distributing data across multiple machines or devices. In an example embodiment, sharding may include splitting one dataset into multiple smaller portions and distributing or deploying the portions across multiple devices. As referenced herein, "sharded" data parallelism or "sharded" data parallel may refer to a data parallelism such as a memory-saving distributed training process that splits the training state(s) of a model (e.g., model parameters, gradients, optimizer states, etc.) across devices (e.g., GPUs, etc.) in a training data parallel device group. It is to be understood that a "shard" may also be used as a noun instead of a verb and may refer to a portion of the data (e.g., states of the model, etc.) that has been split into multiple smaller portions. It is also to be understood that in sharded data parallelism or sharded data parallel, the training data may be split into several shards and each shard is allocated to a device such as a GPU (data parallelism), and the model states (e.g., training states of a model) may be split into several shards and each shard is allocated to a device such as a GPU (sharded data parallelism).

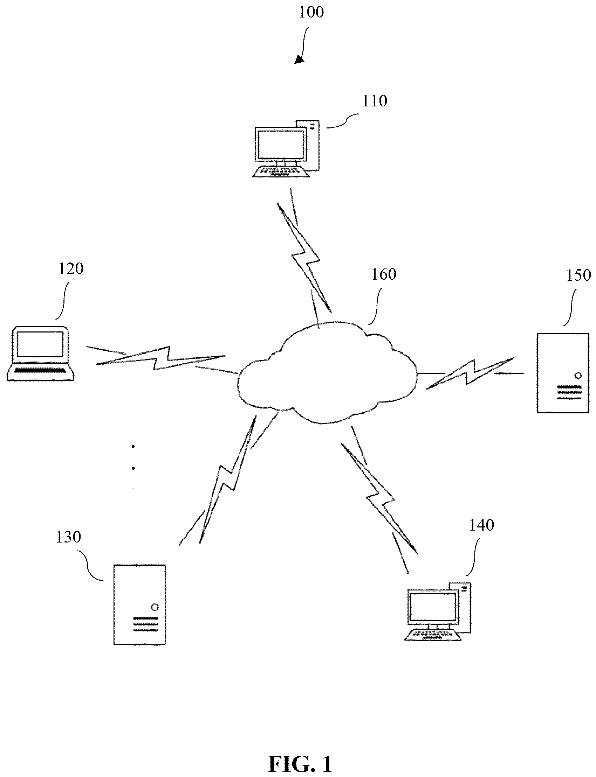

FIG. 1 is a schematic view of an example distributed training and/or fine-tuning system 100 for sharded data parallelism, arranged in accordance with at least some embodiments described herein.

The system 100 may include devices 110, 120, 130, 140, 150, and a network 160. It is to be understood that FIG. 1 only shows illustrative numbers of the devices and/or the network. The embodiments described herein are not limited to the number of the devices and/or the network described. That is, the number of devices and/or networks described herein are provided for descriptive purposes only and are not intended to be limiting.

In accordance with at least some example embodiments, the devices 110, 120, 130, 140, and 150 may be various electronic devices. The various electronic devices may include but not be limited to a mobile device such as a smartphone, a tablet computer, an e-book reader, a laptop computer, a desktop computer, a server, and/or any other suitable electronic devices.

In accordance with at least some example embodiments, the network 160 may be a medium used to provide a communications link among the devices 110, 120, 130, 140, and 150. The network 160 may be the Internet, a local area network (LAN), a wide area network (WAN), a local interconnect network (LIN), a cloud, etc. The network 160 may be implemented by various types of connections, such as a wired communications link, a wireless communications link, an optical fiber cable, etc.

In accordance with at least some example embodiments, one or more of the devices 110, 120, 130, 140, and 150 may be a server for providing various services to users using one or more of other devices. The server may be implemented by a distributed server cluster including multiple servers or may be implemented by a single server.

A user may use one or more of the devices 110, 120, 130, 140, and 150 to interact with each other via the network 160. Various applications or localized interfaces thereof, such as social media applications, online shopping services, dataset operation services, machine learning services, or the like, may be installed on the devices 110, 120, 130, 140, and 150.

It is to be understood that software applications or services according to the embodiments described herein and/or according to the services provided by the service providers may be performed by the devices 110, 120, 130, 140, and 150. Accordingly, the apparatus for the software applications and/or services may be arranged in the devices 110, 120, 130, 140, and 150.

It is also to be understood that when a service is not performed remotely, the system 100 may not include the network 160, but include only the device 110, 120, 130, 140, and/or 150.

It is further to be understood that the devices 110, 120, 130, 140, and 150 may each include one or more processors, a memory, and a storage device storing one or more programs. The devices 110, 120, 130, 140, and/or 150 may also each include an Ethernet connector, a wireless fidelity receptor, etc. The one or more programs, when being executed by the one or more processors, may cause the one or more processors to perform the method(s) described in any embodiments described herein. Also, it is to be understood that a computer readable non-volatile medium may be provided according to the embodiments described herein. The computer readable medium stores computer programs. The computer programs are used to, when being executed by a processor, perform the method(s) described in any embodiments described herein.

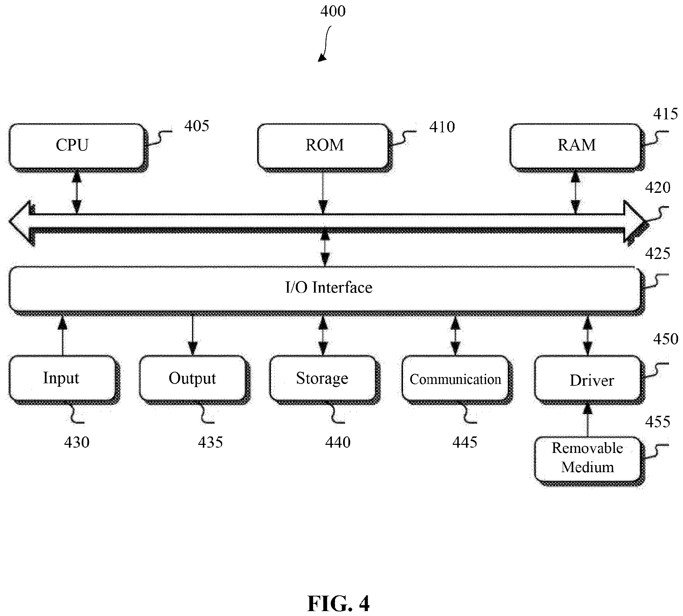

It is further to be understood that in the embodiments described herein, a device may refer to a computer system (e.g., 110, 120, 130, 140, 150, etc.) that includes at least a CPU, a GPU, and/or a combination thereof (see also the description of FIG. 4).

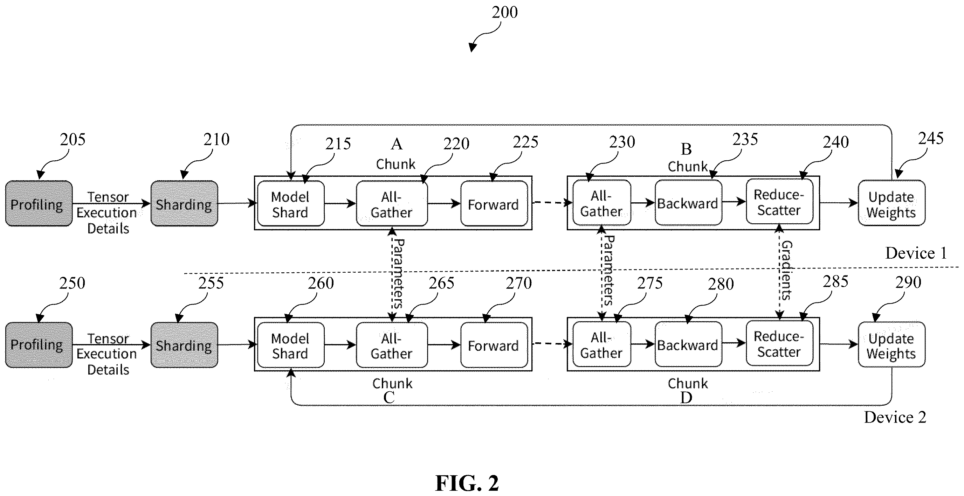

FIG. 2 is a schematic view of an example processing flow 200 of a sharded data parallelism system for optimizing, training, and/or fine-tuning a machine learning model, arranged in accordance with at least some embodiments described herein.

It is to be understood that training a model may refer to learning or determining desired or optimal model parameters (e.g., weight, bias, etc.) based on training data. Fine-tuning a model may refer to an approach to transfer learning in which the model parameters (e.g., weight, etc.) of a pre-trained model are trained on new training data. Optimizing a model may refer to training and/or fine-tuning a model.

It is to be understood that the processing flow 200 disclosed herein can be conducted by one or more processors (e.g., the processor of one or more of the device 110, 120, 130, 140, and 150 of FIG. 1, the CPU or GPU 405 of FIG. 4, and/or any other suitable processor), unless otherwise specified.

It is also to be understood that the processing flow 200 can include one or more operations, actions, or functions as illustrated by one or more of blocks 205, 210, 215, 220, 225, 230, 235, 240, 245, 250, 255, 260, 265, 270, 275, 280, 285, and 290. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 200, operations including initializations or the like may be performed. For example, system parameters and/or application parameters may be initialized.

In an example embodiment, the sharded data parallelism system includes device 1 and device 2. It is also to be understood that FIG. 2 only shows illustrative numbers of the devices. The embodiments described herein are not limited to the number of the devices described. That is, the number of devices described herein are provided for descriptive purposes only and are not intended to be limiting. It is to be understood that the blocks 205, 210, 215, 220, 225, 230, 235, 240, and 245 may be performed on Device 1 by its processor, including communicating with the processor(s) of other device(s). The blocks 250, 255, 260, 265, 270, 275, 280, 285, and 290 may be performed on Device 2 by its processor, including communicating with the processor(s) of other device(s). It is also to be understood that the blocks performed on Device 1 may be symmetric, the same, and/or similar to the blocks performed on device 2. As such, only the blocks performed on Device 1 are described in details below. Processing flow 200 may begin at block 205.

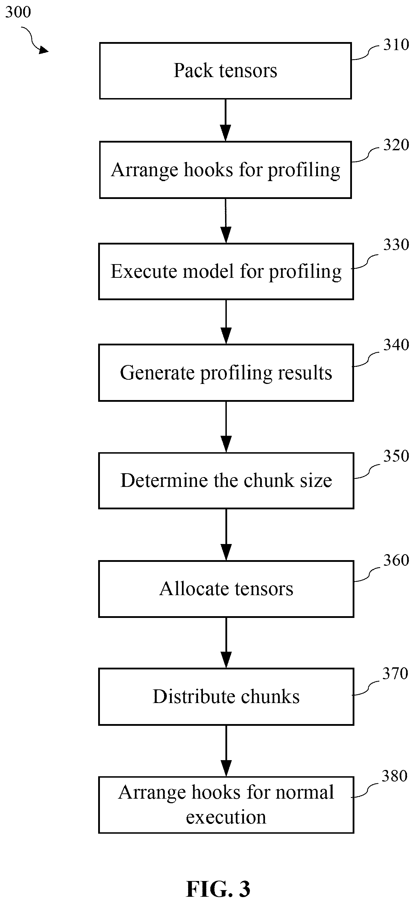

At block 205 (Profiling), the processor may perform a model profiling execution of the machine learning model. In an example embodiment, the model profiling execution may be a single training or fine-tuning step of performing at least a forward operation (block 225) and a backward operation (block 235), and/or other operations (e.g., 215, 220, 230, 240, and/or 245). It is to be understood that blocks 310, 320, 330, and 340 of FIG. 3 also describe the operations of block 205. It is also to be understood that profiling results (to be described in detail below) of the model profiling execution may be the same or substantially the same in all devices in the sharded data parallelism system. In an example embodiment, instead of performing model profiling execution on all devices, the model profiling execution may be performed on one device, and the profiling results may be shared with, communicated to, and/or sent to other devices. That is, block 250 may be optional for Device 1 or 2.

It is to be understood that the profiling phase (block 205) of the processing flow 200 is to gather or obtain the detailed information or data of a model execution. The gathered or obtained information or data (e.g., the profiling results from the model profiling execution) may be utilized to guide the configuration of tensors of the model into various chunks, and/or to guide the placement of chunks inside the GPU memory or inside the CPU memory of the device.

In an example embodiment, the gathered or obtained information or data in a profiling phase may include a hook-able attribute of each tensor. The hook-able attribute of a tensor (and/or its module) may be hook-able attribute or unhook-able. It is to be understood that none of existing hook mechanisms may register, install, arrange, or otherwise associate hook(s) with or on all tensors. The attribute (i.e., the hook-able attribute) of a tensor being unhook-able indicates that a hook cannot be registered, installed, arranged, or otherwise associated with or on the tensor; or even if a hook is registered, installed, arranged, or otherwise associated with or on the tensor, the execution of the hook may still fail. It is also to be understood that if the attribute of a tensor is unhook-able, an internal state machine may break unless actions are taken (e.g., manually changing the model definition, etc.). The attribute of a tensor being hook-able indicates that a hook can be registered, installed, arranged, or otherwise associated with or on the tensor, and the hook can be executed when a triggering condition is met.

It is to be understood that the hook-able attribute of tensors may be determined or obtained in the forward operation phase (block 225) and the backward operation phase (block 235) of the processing flow 200 via installing (or registering, arranging, or otherwise associating) various hooks (e.g., a pre-forward hook, a post-forward hook, a pre-backward hook, a post-backward hook, etc.) on all tensors before executing operations in these phases.

In an example embodiment, the gathered or obtained information or data in a profiling phase may include an execution status of each tensor. It is to be understood that when being triggered or executed, the handler of the post-backward hook may record or determine whether the tensor has been executed in the model profiling execution. After the model profiling execution, a tensor may have an executed status or a non-executed status. The executed status may include a number (e.g., one, two, or multiple) of executions of the tensor in the model profiling execution. The non-executed status may indicate that the tensor is not executed in the model profiling execution.

In an example embodiment, the gathered or obtained information or data in a profiling phase may include an amount of the GPU memory usage (e.g., increases, etc.) during the forward operation phase and/or in the backward operation phase. Such information or data may be used to determine the memory usage of executing a model (e.g., for a normal model execution), and/or to determine the amount or number of chunks that may be kept in the GPU memory for adaptive memory management.

In an example embodiment, the gathered or obtained information or data in a profiling phase may include an execution sequence (or timestamp) of the (executed) tensors in both the forward operation phase and the backward operation phase of the model profiling execution, and include the execution sequence (or timestamp) of the tensors that are recomputed in the backward operation phase when a gradient check-pointing mode of the model is "enabled". It is to be understood that when being triggered or executed, the handler of the pre-forward hook and/or the handler of the pre-backward hook may record or determine the execution order of the tensors. It is also to be understood that the gradient check-pointing mode is enabled, some intermediate results may be discarded and some tensors may be recomputed in the backward operation phase (which may be tracked, recorded, or determined by e.g., the handler of pre-forward hooks of the tensors).

In an example embodiment, the gathered or obtained information or data in a profiling phase may include a gradient check-pointing mode of the model. The gradient check-pointing mode may be "enabled" or "disabled". The gradient check-pointing mode may be determined by checking whether the pre-forward hooks of the tensors are triggered or executed during the backward operation phase (e.g., which tensors (e.g., that are computed or executed in the forward phase) are recomputed in the backward phase). If the pre-forward hooks of the tensors are triggered or executed during the backward operation phase, the gradient check-pointing mode may be enabled; otherwise, the gradient check-pointing mode may be disabled. The re-computation or re-execution information or data may be used to determine which tensors may be allocated or assigned to a same chunk (e.g., those tensors that are recomputed at a same stage (e.g., execution stage, execution phase, etc.) e.g., in view of their re-computation or re-execution sequence, etc.). In an example embodiment, the re-computation or re-execution information or data may be used to determine which tensor may be recomputed first at a stage (e.g., execution stage, execution phase, etc.), and a hook may be registered such tensor may be registered, installed, arranged, or otherwise associated with or on such tensor. It is to be understood that when the gradient check-pointing mode is enabled, the GPU memory usage may be reduced.

In an example embodiment, the gathered or obtained information or data in a profiling phase may include a relationship between the tensors and their corresponding module(s) in the model. Such information (e.g., which tensors are contained in which module, etc.) may be used to register, install, arrange, or otherwise associate hook(s) with or on the modules (instead of and/or in addition to register, install, arrange, or otherwise associate hook(s) with or on the tensors).

It is to be understood that to gather or obtain the information or data of the model execution, hooks (e.g., a pre-forward hook, a post-forward hook, a pre-backward hook, a post-backward hook, etc.) may need to be registered, installed, arranged, or otherwise associated with or on each of the tensors and a model profiling execution need to be performed (including both the forward operation phase and the backward operation phase).

It is also to be understood that module-based hooks may be utilized to (1) control the number of hooks that need to be installed (or registered, arranged, or otherwise associated with or on the module instead of with or on the tensor) to reduce the overhead of handling hooks, and (2) reduce or eliminate side-effects of introducing memory allocation for changing the attributes of a tensor.

It is further also to be understood that the model profiling execution may be performed on a GPU instead of on a CPU of the device. Performing the model profiling execution on a CPU may take much longer time than performing the model profiling execution on a GPU, and it may be difficult to determine the memory usage (e.g., increases, etc.) of the forward operation phase and the backward operation phase e.g., for model normal execution. Since a GPU may have a less memory capacity than a CPU, a chunk-based mechanism may be used by grouping tensors in chunks and loading tensors chunk-by-chunk to the GPU memory. It is to be understood that if some tensors are unhook-able and the unhook-able tensor is the first tensor in the chunk, then the model profiling execution may fail since some tensors may be located in the CPU memory (e.g., not be able to be loaded to the GPU memory). As such, a pre-loading mechanism may be used to account for such issue: when a hook of a tensor is triggered or executed, the current chunk of this tensor and its next chunk may be loaded to the GPU memory.

Blocks 310, 320, 330, and 340 of FIG. 3 also describe the operations of block 205. It is to be understood that training data or non-training data may be used for model profiling execution. Processing may proceed from block 205 to block 210.

At block 210 (Sharding), the processor may (1) determine an optimal chunk size, and/or (2) assign, allocate, arrange, organize, or otherwise store the tensors in different chunks (having a same chunk size) based on the profiling results from the model profiling execution at block 205. The processor may also register, install, arrange, or otherwise associate hooks (e.g., the pre-forward hook, etc.) for selected tensors (and/or modules of the selected tensors). It is to be understood that blocks 350, 360, 370, and 380 of FIG. 3 also describe the operations of block 210. It is also to be understood that the sharding process (to be described in detail below) may be the same or substantially the same for all devices in the sharded data parallelism system. In an example embodiment, instead of performing the sharding process on all devices, the sharding process may be performed on one device, and the results of the sharding process may be shared with, communicated to, and/or sent to other devices. That is, block 255 may be optional for Device 1 or 2.

In an example embodiment, the processor may also distribute, shard, or split the chunks into smaller portions, where the number of portions is the same as the number of devices in the sharded data parallelism system. See also the description of blocks 350, 360, 370, and 380 of FIG. 3. Processing may proceed from block 210 to block 215.

At block 215 (Model Shard), the processor (of each device in the sharded data parallelism system) may obtain the corresponding portion of the training data, and/or the corresponding shard or portion of the chunk, etc. for model normal execution to optimize, train, or fine-tune the model. Processing may proceed from block 215 to block 220.

At block 220 (All-Gather), the processor (of each device) may perform an "all-gather" operation to collect, obtain, receive, or acquire other shards or portions of parameters (e.g., model parameters, etc.) from all devices, store the complete parameters in the device, and/or send the complete parameters to other devices. It is to be understood that the complete parameters may be needed for model normal execution (e.g., for the forward and backward operations). As shown in FIG. 2, for each chunk, the processor may perform an all-gather operation to gather the parameters from all devices in the same process group. Processing may proceed from block 220 to block 225.

At block 225 (Forward), the processor (of each device) may perform the forward operation with the complete tensors (in the complete chunks). In or before the forward operation phase, the handler(s) of the pre-forward hook(s) registered, installed, arranged, or otherwise associated with or on the tensors and/or their modules, may load the corresponding chunk on-demand. The post-forward hooks registered, installed, arranged, or otherwise associated with or on the tensors and/or their modules, when triggered or executed, may register, install, arrange, or otherwise associate the pre-backward hooks with or on the tensors and/or their modules. After the forward operation phase, other shards or portions of chunks (gathered tensors or parameters) from other devices may be released to save memory, and only the shard or portion of chunks of the device may be kept. Processing may proceed from block 225 to block 230.

The operations of block 230 may be substantially the same as the operations of block 220. At block 230 (All-Gather), the processor (of each device) may perform an "all-gather" operation to collect, obtain, receive, or acquire other shards or portions of chunks from all devices, store the complete chunks in the device, and/or send the complete chunks to other devices. It is to be understood that while sharded chunks may save the memory of the device, the complete chunks (that contains the complete tensors) may be needed for model normal execution (e.g., for the forward and backward operations). As shown in FIG. 2, for each chunk, the processor may perform an all-gather operation to gather the parameters from all devices in the same process group. Processing may proceed from block 230 to block 235.

At block 235 (Backward), the processor (of each device) may perform the backward operation with the complete tensors (in the complete chunks). In or before the backward operation phase, the handler(s) of the pre-backward hook(s) registered, installed, arranged, or otherwise associated with or on the tensors and/or their modules, may load the corresponding chunk and save the generated gradients in the post-backward handler. In an example embodiment, the handler(s) of the post-backward hook(s) registered, installed, arranged, or otherwise associated with or on the tensors and/or their modules, when triggered or executed, may copy the gradients to the same location as the FP16 parameters, to save the memory. Processing may proceed from block 235 to block 240.

At block 240 (Reduce-Scatter), the processor (of each device) may perform a "reduce-scatter" operation to (1) e.g., collect or obtain gradients from other devices and to combine them into a global result by a chosen operator (e.g., sum, average, etc.), and (2) distribute or shard the combined gradient from the device to other devices. It is to be understood that the combined gradients may be sharded across all devices in the same process group so that each device may update the weights of each local shard correspondingly. Processing may proceed from block 240 to block 245.

At block 245 (Update Weights), the processor (of each device) may update the weights (and/or other parameters of the model) for its local shard. One cycle of the model normal execution may include the operations from blocks 205, 210, 215, 220, 225, 230, 235, 240, and 245. Processing may proceed from block 245 back to block 205 for next cycle of the model normal execution.

FIG. 3 is a flow chart illustrating an example processing flow 300 of performing operations of the profiling phase (block 205) and operations of the sharding phase (block 210), in accordance with at least some embodiments described herein.

It is to be understood that the processing flow 300 disclosed herein can be conducted by one or more processors (e.g., the processor of one or more of the device 110, 120, 130, 140, and 150 of FIG. 1, the CPU or GPU 405 of FIG. 4, and/or any other suitable processor), unless otherwise specified.

It is also to be understood that the processing flow 300 can include one or more operations, actions, or functions as illustrated by one or more of blocks 310, 320, 330, 340, 350, 360, 370, and 380. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 300, operations including initializations or the like may be performed. For example, system parameters and/or application parameters may be initialized. For example, a model may be created, training data may be prepared, etc. Blocks 310, 320, 330, and 340 illustrate the operations of block 205 (profiling) of FIG. 2, and blocks 350, 360, 370, and 380 illustrate the operations of block 210 (sharding) of FIG. 2. Processing flow 300 may begin at block 310.

At block 310 (Pack tensors), the processor may assign, allocate, arrange, organize, or otherwise store the tensors in different chunks (having a same chunk size) based on e.g., the initialization sequence of the tensors or any other suitable sequence, for model profiling execution. It is to be understood that the initialization sequence of the tensors may be significantly different from the actual execution sequence of the tensors. That is, the actual execution of a model may require constantly jumping from a tensor in one chunk to a tensor in another chunk, leading to the locality issue and causing inefficiency. The locality issue may also require to load multiple chunks simultaneously, leading to a higher memory overhead, comparing to the method of arranging chunks or tensors based on their execution sequence. Since the execution sequence may be determined at blocks 330 and 340, block 360 may assign, allocate, arrange, organize, or otherwise store the tensors in different chunks (having a same chunk size) based on e.g., the execution sequence of the tensors.

It is to be understood that at block 310, the chunk size may be any size within the range of the suitable chunk size (e.g., between the minimum allowable chunk size and the maximum allowable chunk size) for model profiling execution. The optimal chunk size for model normal execution may be determined at block 350. The processor may also preload a few chunks into the GPU memory. Processing may proceed from block 310 to block 320.

At block 320 (Arrange hooks for profiling), the processor may register, install, arrange, or otherwise associate various hooks (e.g., a pre-forward hook, a post-forward hook, a pre-backward hook, a post-backward hook, etc.) with or on all tensors.

It is to be understood that the handler of the pre-forward hook, when being triggered or executed (e.g., immediately before the forward operation), may record or determine the corresponding tensor, the tensor's module, the tensor's execution phase (e.g., in the forward operation phase or backward operation phase), etc. It is also to be understood that when the gradient check-pointing mode of the model is enabled, some intermediate results may be discarded and some tensors need to be recomputed in the backward phase (which may be tracked or recorded by e.g., handle(s) of pre-forward hooks). For the forward operation, the processor may also preload a few chunks in order to avoid the training failure when a corresponding tensor (typically the first tensor in a chunk) is not loaded to the GPU memory. The handler of the pre-backward hook, when being triggered or executed (e.g., immediately before the backward operation), may record or determine a relationship between the tensor and its module. The handler of the post-backward hook, when being triggered or executed (e.g., immediately after the backward operation), may (1) record or determine the execution status of a tensor (e.g., whether a tensor is executed or not), and/or (2) collect or obtain the generated gradients in the backward operation phase. It is to be understood that even if a tensor is executed multiple times, the corresponding post-backward hook may be triggered or executed after the last execution of the tensor. That is, in the post-backward hook handler, the gradient is ready to be saved, obtained, or collected at that time. The handler of the post-forward hook, when being triggered or executed (e.g., during the forward operation), may register, install, arrange, or otherwise associate the pre-backward hooks with or on the tensors and/or their modules. Processing may proceed from block 320 to block 330.

At block 330 (Execute model for profiling), the processor may perform the model profiling execution, with the hooks being registered, installed, arranged, or otherwise associated with or on the tensors and/or their modules. Processing may proceed from block 330 to block 340.

At block 340 (Generate profiling results), the processor (and/or the handlers of the hooks when triggered or executed) may generate, obtain, record, and/or store the profiling results (see description of block 205 of FIG. 2) from the model profiling execution. Processing may proceed from block 340 to block 350.

At block 350 (Determine the chunk size), the processor may determine an optimal size for the chunks, so that a total memory waste of these chunks may be minimized. It is to be understood that the processor may assign, allocate, arrange, organize, or otherwise store the tensors in different chunks (that have a same chunk size). It is also to be understood that a memory waste of a chunk may represent a free or unused space of the chunk after the tensors being assigned, allocated, arranged, organized, or otherwise stored in the chunk.

It is to be understood that a chunk size may have a desired or predetermined range, e.g., between the minimum allowable chunk size MIN (e.g., 128 Mbyte, etc.) and a desirable chunk size that is greater than the MIN (e.g., a maximum allowable chunk size MAX (e.g., 256 Mbyte, etc.)). To simplify the process of determining the optimal chunk size, recurrent tensors (tensors executed more than once or twice) or unhook-able tensors may be placed into a special chunk (or in the GPU memory) that is not sharded, without affecting the determination of the optimal chunk size, while other tensors may be organized into chunks based on their execution order of the forward operation. Also tensors satisfying the following conditions may be placed into a same chunk: (1) tensors of a same module of the model, which may be identified or determined via analyzing the names of each tensor - e.g., tensors with a same module name may be identified as being in the same module, and (2) tensors recomputed in a same stage during the backward operation -- by placing these tensors into a same chunk, only the pre-forward hook may need to be registered, installed, arranged, or otherwise associated with or on the first tensor of such a group of tensors. It is to be understood that when gradient check-pointing mode of the model is enabled, the forward operation of such tensors may be recomputed during the backward operation; and as such, setting the pre-forward hook on the first tensor may be sufficient to ensure that all the tensors recomputed in the same stage are loaded to the GPU memory (e.g., before the re-computation or re-execution of the tensors in the backward operation phase).

It is also to be understood that the optimal chunk size may be larger than the maximum size of each group of tensors satisfying the above-identified conditions.

It is further to be understood that during the determination process to identify or determine the optimal chunk size, multiple possible chunk sizes may be obtained. A total waste for each possible chunk size may be computed or determined, the chunk size with the minimum waste may be the optimal chunk size.

In an example embodiment, the processor may start with the minimum allowable chunk size MIN as the chunk size, and for each cycle of determining the chunk size, increase the chunk size by a predetermined size (e.g., 1 Kbyte, etc.). For each chunk size in each cycle of determining the chunk size, the processor may check all the tensor groups in a tensor group list, where the tensors that satisfying the above conditions (e.g., need to be executed together, etc.) are organized in the same group. If all tensors of the current tensor group list are able to be packed into the current chunk (with the current possible chunk size), then the processor may add all the tensors of this tensor group into the current chunk, and then update the size of the current chunk; otherwise, the processor may stop or close the current chunk, and add all tensors of this tensor group into the next chunk. When stopping or closing the current chunk, the processor may compute the memory waste of the current chunk. At the end of the chunk size determination process, the processor may choose the list of chunks with the minimum waste as the optimal chunk configuration, and the corresponding chunk size as the optimal chunk size. Processing may proceed from block 350 to block 360.

At block 360 (Allocate tensors), the processor may assign, allocate, arrange, organize, or otherwise store the tensors in the chunks (with the optimal chunk size) determined at block 350. As discussed in block 350 and/or in block 205 of FIG. 2, e.g., based on the hook-able attribute of tensors, the processor may arrange the chunks correspondingly, by e.g., placing a hook-able tensor in the first or the last position of each chunk, and/or not placing the unhook-able tensors in the first or the last position of each chunk, as the processor may install (or register, arrange, or otherwise associate) the hooks on the first tensor of each chunk (for the forward operation phase) and on the last tensor of each chunk (for the backward operation phase). If a tensor is defined but is never executed during the model profiling execution, the processor may not include such a tensor in the chunks, as the tensor may confuse the logic of checking whether a chunk need to be reduced (see block 240 of FIG. 2) after the backward operation phase. The processor may also maintain a mapping between each tensor and its chunk so that the processor may obtain the chunk of each tensor quickly in the forward operation phase and the backward operation phase. Processing may proceed from block 360 to block 370.

At block 370 (Distribute chunks), the processor may distribute or shard each chunk to split or divide each chunk into smaller shards or portions, where the number of shards or portions may be the same as the number of devices in the same process group. Each device may only keep a shard of the chunk(s). In an example embodiment, a single-program-multiple-data implementation may be achieved, and all devices may have a same program (e.g., a same machine learning model, etc.). That is, every device may keep its own shard of chunks (that contain the shard of tensors or parameters), and discard other shards of chunks e.g., after the forward operation and/or backward operation. Processing may proceed from block 370 to block 380.

At block 380 (Arrange hooks for normal execution), the processor may register, install, arrange, or otherwise associate the pre-forward hooks and/or post-forward hooks with or on a selected tensors and/or their modules. It is to be understood that at the end of the sharding phase, the processor may register, install, arrange, or otherwise associate some hooks on selected tensors so that the corresponding chunks may be loaded (e.g., into the GPU memory) and the pre-backward hooks may be installed (or registered, arranged, or otherwise associated) on-time in the forward operation phase.

In an example embodiment, the selected tensors on which or with which the hooks may be registered, installed, arranged, or otherwise associated are listed as follows: (1) the first tensor of each chunk -- by installing (or registering, arranging, or otherwise associating) hooks on these tensors, the corresponding chunk may be loaded (e.g., into the GPU memory) before being accessed in the forward operation phase; (2) the first tensor of each group of tensors that may be recomputed (e.g., at a same stage, etc.) in the backward operation phaseby installing (or registering, arranging, or otherwise associating) hooks on the first tensor, it may ensure that the corresponding tensors may be loaded into the GPU memory before re-computing the tensors for a model with the gradient check-pointing mode being enabled; and (3) the last tensor of each chunk -- when the gradient check-pointing mode is not enabled (or disabled), installing (or registering, arranging, or otherwise associating) hooks on the last tensor (as it may be accessed first in the backward operation phase) may ensure that the corresponding chunk may be loaded into the GPU memory in the pre-backward (i.e., before backward operation) phase. It is to be understood that by installing (or registering, arranging, or otherwise associating) hooks on selected tensors (and/or allocating or assigning the tensors to chunks based on the execution or re-execution order of the tensors), memory usage may be reduced, system efficiency and execution speed may be improved, and the need to change the model definition (e.g., due to unhook-able tensors) may be reduced or eliminated. Processing may proceed from block 380 to e.g., block 215 of FIG. 2.

Features in the embodiments disclosed herein may provide efficient use of network bandwidth, reduced communication, and avoidance of potential memory fragmentation, leading to higher CPU-GPU and inter-GPU bandwidth utilization.

Features in the embodiments disclosed herein may greatly speed up the training of large machine learning models by allowing multiple devices to process different parts of the data in parallel, and may be particularly effective for tasks such as image or speech recognition, natural language processing, and/or recommendation systems.

Features in the embodiments disclosed herein may introduce a profiling phase before the actual or normal model execution in order to collect the details of tensor executions, and introduce a sharding phase to arrange the tensors into the chunks based on the execution order and attributes of the tensors, overcoming the locality issues. Features in the embodiments disclosed herein may handle some unhook-able tensors (identified via the profiling phase) separately - such tensors may be always kept in the GPU memory, or be hidden in the middle of chunks based on their execution order. Features in the embodiments disclosed herein may determine or predict the total memory usage of intermediate results, where such information may allow for predicting the overall memory usage during the forward operation and backward operation, and allow for moving or keeping some chunks of model states (parameters, optimizer states) into the GPU memory.

FIG. 4 is a schematic structural diagram of an example computer system 400 applicable to implementing an electronic device (for example, one of the devices shown in FIG. 1), arranged in accordance with at least some embodiments described herein. It is to be understood that the computer system shown in FIG. 4 is provided for illustration only instead of limiting the functions and applications of the embodiments described herein.

As depicted, the computer system 400 may include a central processing unit (CPU) or a graphic processing unit (GPU) 405. The CPU or GPU 405 may perform various operations and processing based on programs stored in a read-only memory (ROM) 410 or programs loaded from a storage device 440 to a random-access memory (RAM) 415. The RAM 415 may also store various data and programs required for operations of the system 400. The CPU or GPU 405, the ROM 410, and the RAM 415 may be connected to each other via a bus 420. An input/output (I/O) interface 425 may also be connected to the bus 420.

The components connected to the I/O interface 425 may further include an input device 430 including a keyboard, a mouse, a digital pen, a drawing pad, or the like; an output device 435 including a display such as a liquid crystal display (LCD), a speaker, or the like; a storage device 440 including a hard disk or the like; and a communication device 445 including a network interface card such as a LAN card, a modem, or the like. The communication device 445 may perform communication processing via a network such as the Internet, a WAN, a LAN, a LIN, a cloud, etc. In an embodiment, a driver 450 may also be connected to the I/O interface 425. A removable medium 455 such as a magnetic disk, an optical disk, a magneto-optical disk, a semiconductor memory, or the like may be mounted on the driver 450 as desired, such that a computer program read from the removable medium 455 may be installed in the storage device 440.

It is to be understood that the processes described with reference to the flowchart of FIG. 3 and/or the processes described in FIG. 2 may be implemented as computer software programs or in hardware. The computer program product may include a computer program stored in a computer readable non-volatile medium. The computer program includes program codes for performing the method shown in the flowcharts and/or GUIs. In this embodiment, the computer program may be downloaded and installed from the network via the communication device 445, and/or may be installed from the removable medium 455. The computer program, when being executed by the central processing unit (CPU) or the graphic processing unit (GPU) 405, can implement the above functions specified in the method in the embodiments disclosed herein.

Features in the embodiments disclosed herein may improve the optimizing, training, or fine-tuning of chunk-based sharded data parallelism, by e.g., introducing a profiling phase before the normal model execution in order to collect, obtain, or determine all execution details of the tensors, and by using the profiling results from the profiling phase to guide the arrangement of all tensors into the corresponding chunks and to guide adaptive memory management.

Features in the embodiments disclosed herein may, during the profiling phase, collect, obtain, or determine all details of a model's execution, including (1) which tensors are hook-able in the forward operation and in the backward operation via installing (or registering, arranging, or otherwise associating) module-based hooks in the profiling phase, (2) which tensors have been executed in the profiling phase via installing (or registering, arranging, or otherwise associating) the post-backward hooks, (3) the GPU memory usage (e.g., GPU memory increases during the forward operation and/or the backward operation, etc.), (4) the execution order of the tensors in both the forward operation and the backward operation, including the execution order of the tensors that are recomputed in the backward operation phase when gradient check-pointing mode is enabled, (5) whether the gradient check-pointing mode is enabled by checking whether the pre-forward hooks are triggered or executed during the backward operation phase, and/or (6) the relationship between the tensors and their corresponding module, where such information may be used to install (or register, arrange, or otherwise associate) the hooks on the modules.

Features in the embodiments disclosed herein may, based on the profiling results, organize tensors of chunks before the model normal execution for actual training and fine-tuning, where (1) tensors are organized in the same order as their execution order, addressing the locality issues of the chunks (and improving throughput) and reducing the GPU memory consumption, (2) multiple tensors of the same module are assigned to a same chunk, (3) tensors re-computing in the same execution phase are assigned to a same chunk, (4) tensors being executed multiple times may be kept in the GPU memory (instead of in a sharded chunk), and (5) unhook-able tensors may either be kept in the GPU memory or be packed in a middle of a chunk.

Features in the embodiments disclosed herein may, based on the arrangement of the chunks, install (or register, arrange, or otherwise associate) module-based hooks on the tensors and/or their modules, where (1) the first tensor in the chunk may install (or register, arrange, or otherwise associate) a pre-forward hook, and the last tensor in the chunk may install (or register, arrange, or otherwise associate) a pre-backward hook, and (2) the first tensor of tensors recomputed in the same phase during the backward operation may install (or register, arrange, or otherwise associate) a pre-backward hook, and installing (or registering, arranging, or otherwise associating) selected hooks on selected tensors/modules may significantly reduce the number of hooks, and avoid the unnecessary overhead of handling hooks.

Features in the embodiments disclosed herein may, based on the profiling results, predict the number of chunks (including their tensors such as the FP32/FP16 parameters and optimizer states) that may be placed in the GPU, which may significantly reduce the volume of memory copying between the GPU memory and the CPU memory, and may further improve the optimization via using the existing optimizer. Features in the embodiments disclosed herein may compute the potential memory increase of normal execution (mainly for storing the intermediate results) and the remaining GPU memory available, and then compute the volume of chunks to be kept inside the GPU memory, for adaptive memory management. It is to be understood that compared with existing mechanisms, the adaptive memory management disclosed herein may reduce the memory consumption by offloading partial data and computation from the GPU to the CPU, while keeping as much data and computation in the GPU as possible in view of the available GPU memory usage, to reduce the volume of memory copying between the GPU memory and the CPU memory, to maximize the utility of the GPU to improve the performance, to reduce the specific configuration of the chunks remain in the GPU memory (e.g., by using the profiling results to predict the GPU memory usage, etc.), to avoid out-of-memory issue due to misconfigurations of the chunks remain in the GPU memory, and to achieve an optimal throughput.

It is to be understood that the disclosed and other solutions, examples, embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., a field programmable gate array, an application specific integrated circuit, or the like.

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., erasable programmable read-only memory, electrically erasable programmable read-only memory, and flash memory devices; magnetic disks, e.g., internal hard disks or removable disks; magneto optical disks; and compact disc read-only memory and digital video disc read-only memory disks. The processor and the memory can be supplemented by, or incorporated in, special purpose logic circuitry.

It is to be understood that different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

### Aspects:

It is appreciated that any one of aspects can be combined with each other.

Aspect 1. A method for training a machine learning model on a plurality of devices in parallel, the method comprising: performing a model profiling execution before a model normal execution; allocating tensors of the model into a plurality of chunks based on profiling results from the model profiling execution; and performing the model normal execution on the plurality of devices in parallel to train the model.

Aspect 2. The method of aspect 1, wherein the performing of the model profiling execution includes executing the model to determine a hook-able attribute of the tensors; determine an execution status of the tensors; determine a memory usage of the model profiling execution; determine an execution sequence of the tensors; determine a gradient check-pointing mode of the model; and determine a module of the model for the tensors.

Aspect 3. The method of aspect 2, wherein the allocating of the tensors of the model into the chunks based on the profiling results includes: arranging the tensors in a same sequence as the execution sequence; allocating the tensors in a same module into a same chunk; allocating the tensors recomputed in a same stage into a same chunk; allocating the tensors having a multi-execution status in a GPU memory; and allocating the tensors having the hook-able attribute being unhook-able in the GPU memory or in a middle of a chunk.

Aspect 4. The method of any one of aspect 2 or aspect 3, further comprising: determining locations of the chunks for the model normal execution based on the memory usage of the model profiling execution.

Aspect 5. The method of any one of aspects 1-4, wherein the performing of the model normal execution on the plurality of devices in parallel includes: distributing training data among the plurality of devices; gathering parameters from the plurality of devices; performing a forward operation based on the gathered parameters; and releasing the gathered parameters after the performing of the forward operation.

Aspect 6. The method of any one of aspects 1-5, wherein the performing of the model normal execution on the plurality of devices in parallel includes: distributing training data among the plurality of devices; gathering parameters from the plurality of devices; performing a backward operation based on the gathered parameters; and releasing the gathered parameters after the performing of the backward operation.

Aspect 7. The method of any one of aspects 1-6, wherein the performing of the model normal execution on the plurality of devices in parallel includes: distributing gradients among the plurality of devices; and updating parameters of the model.

Aspect 8. The method of any one of aspects 1-7, further comprising: distributing the chunks among the plurality of devices.

Aspect 9. The method of aspect 8, wherein the performing of the model normal execution includes: executing the model on each of the plurality of devices based on the distributed chunks.

Aspect 10. The method of any one of aspects 1-9, further comprising: arranging hooks on a portion of tensors in the chunks based on the allocating of the tensors.

Aspect 11. The method of aspect 10, wherein the arranging of the hooks includes: arranging a pre-forward hook on a first tensor in the chunks; arranging a pre-backward hook on a last tensor in the chunks; and arranging a pre-backward hook on a first tensor of the tensors recomputed in a same stage.

Aspect 12. The method of any one of aspects 1-11, wherein the performing of the model normal execution on the plurality of devices in parallel includes: performing the model normal execution based on the profiling results from the mode profiling execution and the allocating of the tensors.

Aspect 13. The method of any one of aspects 1-12, further comprising: distributing the chunks having the allocated tensors among the plurality of devices.

Aspect 14. A machine learning model training system, the system comprising: a memory to store a machine learning model; at least one processor to: perform a model profiling execution before a model normal execution; allocate tensors of the model into chunks based on profiling results from the model profiling execution; and perform the model normal execution on a plurality of devices in parallel to train the model.

Aspect 15. The system of aspect 14, wherein the at least one processor is to further execute the model to determine a hook-able attribute of the tensors; determine an execution status of the tensors; determine a memory usage of the model profiling execution; determine an execution sequence of the tensors; determine a gradient check-pointing mode of the model; and determine a module of the model for the tensors.

Aspect 16. The system of aspect 15, wherein the at least one processor is to further: arrange the tensors in a same sequence as the execution sequence; allocate the tensors in a same module into a same chunk; allocate the tensors recomputed in a same stage into a same chunk; allocate the tensors having a multi-execution status in a GPU memory; and allocate the tensors having the hook-able attribute being unhook-able in the GPU memory or in a middle of a chunk.

Aspect 17. The system of aspect 15 or aspect 16, wherein the at least one processor is to further: determine locations of the chunks for the model normal execution based on the memory usage of the model profiling execution.

Aspect 18. The system of any one of aspects 14-17, wherein the at least one processor is to further: arrange hooks on a portion of tensors in the chunks based on the allocating of the tensors.

Aspect 19. The system of aspect 18, wherein the at least one processor is to further: arrange a pre-forward hook on a first tensor in the chunks; arrange a pre-backward hook on a last tensor in the chunks; and arrange a pre-backward hook on a first tensor of the tensors recomputed in a same stage.

Aspect 20. A non-transitory computer-readable medium having computer-executable instructions stored thereon that, upon execution, cause one or more processors to perform operations comprising: performing a model profiling execution before a model normal execution; allocating tensors of a machine learning model into chunks based on profiling results from the model profiling execution; and performing the model normal execution on a plurality of devices in parallel to train the model.

Aspect 21. The computer-readable medium of aspect 20, wherein the performing of the model profiling execution includes executing the model to determine a hook-able attribute of the tensors; determine an execution status of the tensors; determine a memory usage of the model profiling execution; determine an execution sequence of the tensors; determine a gradient check-pointing mode of the model; and determine a module of the model for the tensors.

Aspect 22. The computer-readable medium of aspect 21, wherein the allocating of the tensors of the machine learning model into the chunks based on the profiling results includes: arranging the tensors in a same sequence as the execution sequence; allocating the tensors in a same module into a same chunk; allocating the tensors recomputed in a same stage into a same chunk; allocating the tensors having a multi-execution status in a GPU memory; and allocating the tensors having the hook-able attribute being unhook-able in the GPU memory or in a middle of a chunk.

Aspect 23. The computer-readable medium of aspect 21 or aspect 22, the operations further comprise: determining locations of the chunks for the model normal execution based on the memory usage of the model profiling execution.

Aspect 24. The computer-readable medium of any one of aspects 20-23, the operations further comprise: arranging hooks on a portion of tensors in the chunks based on the allocating of the tensors.

Aspect 25. The computer-readable medium of aspect 24, wherein the arranging of the hooks includes: arranging a pre-forward hook on a first tensor in the chunks; arranging a pre-backward hook on a last tensor in the chunks; and arranging a pre-backward hook on a first tensor of the tensors recomputed in a same stage.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This specification and the embodiments described are exemplary only, with the true scope and spirit of the disclosure being indicated by the claims that follow.

## Claims

1. A method for training a machine learning model on a plurality of devices in parallel, the method comprising:
performing a model profiling execution before a model normal execution;
allocating (360) tensors of the model into a plurality of chunks based on profiling results from the model profiling execution; and
performing the model normal execution on the plurality of devices in parallel to train the model.

2. The method of claim 1, wherein the performing of the model profiling execution includes executing the model to:
determine a hook-able attribute of the tensors;
determine an execution status of the tensors;
determine a memory usage of the model profiling execution;
determine an execution sequence of the tensors;
determine a gradient check-pointing mode of the model; and
determine a module of the model for the tensors.

3. The method of claim 2, wherein the allocating of the tensors of the model into the chunks based on the profiling results includes:
arranging the tensors in a same sequence as the execution sequence;
allocating the tensors in a same module into a same chunk;
allocating the tensors recomputed in a same stage into a same chunk;
allocating the tensors having a multi-execution status in a memory; and
allocating the tensors having the hook-able attribute being unhook-able in the memory or in a middle of a chunk.

4. The method of claim 2, further comprising:
determining locations of the chunks for the model normal execution based on the memory usage of the model profiling execution.

5. The method of claim 1, further comprising:
arranging hooks on a portion of tensors in the chunks based on the allocating of the tensors.

6. The method of claim 5, wherein the arranging of the hooks includes:
arranging a pre-forward hook on a first tensor in the chunks;
arranging a pre-backward hook on a last tensor in the chunks; and
arranging a pre-backward hook on a first tensor of the tensors recomputed in a same stage.

7. The method of claim 1, wherein the performing of the model normal execution on the plurality of devices in parallel includes:
performing the model normal execution based on the profiling results from the model profiling execution and the allocating of the tensors.

8. The method of claim 1, further comprising:
distributing the chunks having the allocated tensors among the plurality of devices.

9. A machine learning model training system, the system comprising:
a memory to store a machine learning model;
at least one processor to:
perform a model profiling execution before a model normal execution;
allocate tensors of the model into chunks based on profiling results from the model profiling execution; and
perform the model normal execution on a plurality of devices in parallel to train the model.

10. The system of claim 9, wherein the at least one processor is to further execute the model to:
determine a hook-able attribute of the tensors;
determine an execution status of the tensors;
determine a memory usage of the model profiling execution;
determine an execution sequence of the tensors;
determine a gradient check-pointing mode of the model; and
determine a module of the model for the tensors.

11. The system of claim 10, wherein the at least one processor is to further:
arrange the tensors in a same sequence as the execution sequence;
allocate the tensors in a same module into a same chunk;
allocate the tensors recomputed in a same stage into a same chunk;
allocate the tensors having a multi-execution status in a memory; and
allocate the tensors having the hook-able attribute being unhook-able in the memory or in a middle of a chunk.

12. The system of claim 10, wherein the at least one processor is to further:
determine locations of the chunks for the model normal execution based on the memory usage of the model profiling execution.

13. The system of claim 9, wherein the at least one processor is to further:
arrange hooks on a portion of tensors in the chunks based on the allocating of the tensors.

14. The system of claim 13, wherein the at least one processor is to further:
arrange a pre-forward hook on a first tensor in the chunks;
arrange a pre-backward hook on a last tensor in the chunks; and
arrange a pre-backward hook on a first tensor of the tensors recomputed in a same stage.

15. A non-transitory computer-readable medium having computer-executable instructions stored thereon that, upon execution, cause one or more processors to perform operations comprising:
performing a model profiling execution before a model normal execution;
allocating tensors of a machine learning model into chunks based on profiling results from the model profiling execution; and
performing the model normal execution on a plurality of devices in parallel to train the model.
